# EUROPÄISCHE PATENTANMELDUNG

(11) **EP 1 585 203 A1**
(43) Veröffentlichungstag der Anmeldung: **12.10.2005**
(21) Anmeldenummer: 05105841.0
(22) Anmeldetag: 14.11.2002
(51) Int. Cl.: H02B 1/56, H02B 1/28

(54) **Gehäuse aus feuerhemmendem Material**

(30) Priorität: 27.11.2001 DE 10158042
(62) Teilanmeldung aus: 02804145.7
(71) Anmelder: Celsion Brandschutzsysteme GmbH, 63110 Rodgau (DE)
(72) Erfinder: Schubert, Boris, 63110, Rodgau (DE)
(74) Vertreter: Flötotto, Hubert

(57) **Zusammenfassung**

Die Erfindung betrifft ein Gehäuse aus feuerhemmendem Material (12, 13, 14) mit einer Rückwand, zwei Seitenwänden (3), einer oberen Deckenwand und einer unteren Bodenwand sowie einer herausnehmbaren oder drehbar gelagerten Tür. Erfindungsgemäß ist in einer Wand ein Schacht (46) angeordnet.

## Beschreibung

Die Erfindung betrifft ein Gehäuse aus feuerhemmendem Material mit einer Rückwand, zwei Seitenwänden, einer oberen Deckenwand und einer unteren Bodenwand sowie einer herausnehmbaren oder drehbar gelagerten Tür.

Ein solches Gehäuse ist aus der DE 199 02 971 C1 als Verteilergehäuse zur Aufnahme von elektronischen Schaltgeräten bekannt. Das Innere des Verteilergehäuses ist mit einer Brandschutzauskleidung versehen. In dem Verteilergehäuse ist ein Ausschnitt zum Einführen von Kabeln vorgesehen und der Ausschnitt ist mittels eines von der Außenseite der entsprechenden Seitenwand vorstehenden Kabeleinführungsaufsatzes abgedeckt. Derartige Verteilergehäuse sollen in einem Brandfall den dabei auftretenden Temperaturen über einen Zeitraum von 30 bis 90 Minuten standhalten und die in dem Gehäuse befindlichen elektrischen Geräte schützen. Insbesondere soll eine Stromversorgung für eine Notbeleuchtung, für Brandmeldeanlagen, für Steuerungen, für Sprinkleranlagen und für Fahrstühle aufrechterhalten werden. Die Verteilergehäuse werden in Brennöfen gestellt, um ihre Funktionalität im Brandfall und unter Hitzeeinwirkung mit Temperaturen über 1000°C zu überprüfen. Die Gehäuse halten diesen Temperaturen auch über den geforderten Zeitraum von 30 bis 90 Minuten stand. Allerdings bleibt dabei unberücksichtigt, dass im Betriebszustand die Verteilergehäuse mit der Elektronik bereits ausgerüstet sind. Die in Betrieb befindliche Elektronik innerhalb der Gehäuse lässt die Temperatur im Innern des Gehäuses auf Werte ansteigen, die deutlich über einer Umgebungstemperatur liegt.

Der Erfindung liegt daher die Aufgabe zugrunde, hier Abhilfe zu schaffen und ein einfaches Gehäuse anzugeben, das bei in Betrieb befindlicher Elektronik einer Hitzeeinwirkung über einen längeren Zeitraum von bis zu 90 Minuten standhält. Eine Stromversorgung soll für diesen Zeitraum gewährleistet sein.

Diese Aufgabe wird gemäss der Merkmale des Anspruchs 1 gelöst. Erfindungsgemäß ist in einer Wand ein Schacht angeordnet. Der Schacht dient zur Belüftung, um bei im Betrieb befindlicher Elektronik die Temperaturen im Inneren des Gehäuses auf Umgebungstemperatur abzusenken. Dabei ist bereits berücksichtigt, dass Verteilergehäuse durch Türspalten, die sich durch Fertigungstoleranzen ergeben, belüftet sind. Diese Belüftung durch die Türspalten allein ist jedoch zu gering, um die in Betrieb befindliche Elektronik ausreichend zu kühlen. Der Belüftungsschacht in Verbindung mit den Türspalten ist jedoch ausreichend, um eine Belüftung zu erzielen, die das Innere des Verteilergehäuses bei in Betrieb befindlicher Elektronik auf Umgebungstemperatur absenkt. Bei einem in der oberen Deckenwand angeordneten Belüftungsschacht ist berücksichtigt, dass erwärmte Luft nach oben steigt.

In vorteilhafter Weise weist der Schacht eine Absperrvorrichtung auf. Diese Absperrvorrichtung ist in der Lage, den Belüftungsschacht schnell und sicher zu verschließen. Es sind Absperrvorrichtungen mit einem Metallrohr, einem Mittenstab, zwei halbkreisförmigen Klappenflügeln, einer Feder und einem Schmelzlot bekannt. Bei Überschreitung einer definierten Umgebungstemperatur von zum Beispiel 72°C gibt das integrierte Schmelzlot die Flügel frei, die durch die Kraft der Feder um den Mittenstab eine viertel Umdrehung ausführen und das Metallrohr schließen. Diese Absperrvorrichtungen werden in Rohre von Klimaanlagen eingesetzt. Dabei ist es unerheblich, dass das Metallrohr eine Wärmebrücke darstellt.

In vorteilhafter Weise endet die Absperrvorrichtung innerhalb der Wand. Damit ist eine direkte Wärmebrücke zwischen Umgebung und Innenraum des Verteilergehäuses verhindert.

In vorteilhafter Weise weist der Schacht Aufschäummittel auf. Diese Aufschäummittel schäumen im Brandfall auf und bilden eine Isolationsschicht aus.

In vorteilhafter Weise weist der Schacht einen Filter auf. Damit ist trotz Konvektion die Reinheit des Innenraumes gewährleistet.

In vorteilhafter Weise weist der Schacht einen Lüfter auf. Damit ist eine Zwangbelüftung erzielt.

In vorteilhafter Weise saugt der Lüfter Luft durch den Schacht an. Damit ist sichergestellt, dass in den Innenraum beförderten Luft von dem Filter gereinigt wird und die Türspalte frei von Verschmutzungen sind.

In vorteilhafter Weise ist ein zweiter Belüftungsschacht in der Tür angeordnet. Die in Betrieb befindliche Elektronik erwärmt die Luft. Die Luft strömt durch den Belüftungsschacht der Tür in den Innenraum des Verteilergehäuses und über den Belüftungsschacht der Deckenwand nach außen. Dabei wird Wärme abgeführt.

In vorteilhafter Weise weist der Schacht einen oberen und einen unteren Bereich auf. Der untere Bereich weist Kanäle und somit einen geringeren Querschnitt auf. Damit ist ein Durchlassvolumen verringert, das somit schnell durch Aufschäummittel schließbar ist.

In vorteilhafter Weise findet das Gehäuse Anwendung als Verteilergehäuse zur Aufnahme elektronischer Schaltgeräte und als Gehäuse zur Aufnahme und Sicherung von Akten- und Datenmaterial.

Zum besseren Verständnis der Erfindung wird nachstehend ein Ausführungsbeispiel anhand der Zeichnung näher erläutert.

Es zeigen
Fig. 1 ein Verteilergehäuse in geschnittener Seitenansicht,
Fig. 2 das Verteilergehäuse in Draufsicht und
Fig. 3 einen Belüftungsschacht des Verteilergehäuses.

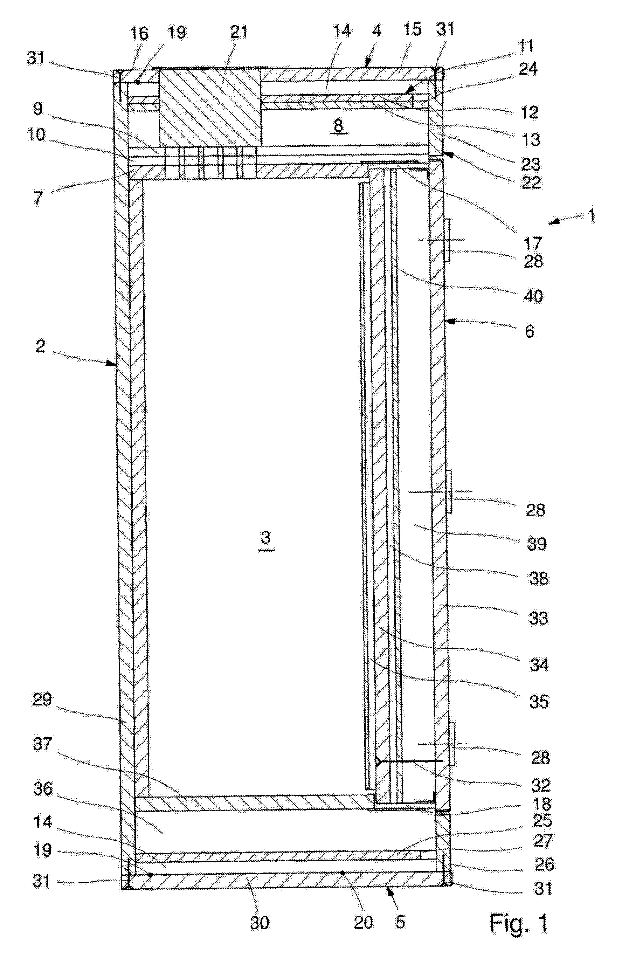

Figur 1 zeigt ein Verteilergehäuse 1 mit einer Rückwand 2, zwei Seitenwänden 3, einer oberen Deckenwand 4, einer unteren Bodenwand 5 und einer Tür 6. Die Deckenwand 4 weist von innen nach außen gesehen eine wasserhaltige Schicht 7, danach eine Fasermaterialschicht 8 mit Platten 9 und 10, des weiteren eine wasserhaltige Schicht 11 mit Platten 12 und 13, darauf folgend eine Faserschicht 14 und eine äußere wasserhaltige Schicht 15 mit einer Beschichtung 16 auf. Die äußere wasserhaltige Schicht 15 des Verteilergehäuses 1 ist von Holzfaser verstärkten und teilweise Glasfaser verstärkten Gipsplatten 15 gebildet. Die äußere Faserschicht 14 weist eine niedrigere Dichte als die innere Faserschicht 8 auf. Die Faserschicht 14 ist eine Fasermatte, die sich über einen inneren Umfang innerhalb der beiden Seitenwände 3, der oberen Deckenwand 4 und der unteren Bodenwand 5 erstreckt. Die geschlossene Tür 6 ist zwischen der oberen Deckenwand 4 und der unteren Bodenwand 5 eingebettet. Die Wände 4 und 5 begrenzen die geschlossene Tür 6. Zwischen den Wänden 4 und 5 und der Tür 6 sind Spalte 17 und 18 vorhanden.

Die Fasermatte 14, die sich einteilig in den Seitenwänden 3, der Deckenwand 4 und der Bodenwand 5 erstreckt, ist von Drähten 19 und 20 umwickelt, die sich somit ebenfalls über einen inneren Umfang des Verteilergehäuses 1 erstrecken und auf große Flächen der Matte 14 einwirken. Im Brandfall ist somit das gesamte Gehäuse von der Matte 14 und von den Drähten 19 und 20 zusammengehalten. Eine innere Platte 7 der wasserhaltigen Schicht 7 aus Gips verleiht dem Verteilergehäuse 1 eine innere Stabilität und dichtet den Innenraum gegen das Fasermaterial der Schicht 8 ab. Eine Kabeleinführung 21 ist in der oberen Deckenwand 4 eingebettet. Eine äußere an einer Frontseite 22 angeordnete Gipsplatte 23 der Wand 4 ist senkrecht zu den Platten 12, 13, 14, 15 und parallel der Tür 6 ausgerichtet und begrenzt die Wand 4. Die Gipsplatten 12 und 13 sind zu der an der Türseite 22 angeordneten Gipsplatte 23 beabstandet. Eine dabei entstehende Lücke 24 wird von Fasermaterial aufgefüllt. In der unteren Bodenwand 5 ist ebenfalls zwischen einer inneren Gipsplatte 25 und einer äußeren an der Frontseite 22 senkrecht zur ersten gelegenen weiteren Gipsplatte 26 eine Lücke 27 vorgesehen, die mit Fasermaterial aufgefüllt ist und die einen Abstand zwischen den Gipsplatten 25 und 26 sicherstellt. Das Fasermaterial ist eine biolösliche Steinwollfaser mit einem Oxidanteil, insbesondere Na₂O; K₂O; CaO; MgO; BaO, Al₂O₃; SiO₂; ZrO₂. Der Metalloxidanteil bestimmt einen hohen Schmelzpunkt von 1050 - 1200°C. Die Tür 6 ist mittels Scharnieren 28 drehbar gelagert.

Die Rückwand 2 weist eine äußere Gipsplatte 29, die Bodenwand 5 eine äußere Gipsplatte 30 auf. Die äußeren Gipsplatten 15, 23, 26, 29 und 30 sind mittels Schrauben 31 untereinander verschraubt und gewährleisten so die Stabilität des Verteilergehäuses 1. Die Schrauben 31 sind so angeordnet, dass keine Wärmebrücke in das Innere des Gehäuses 1 führt. Eine Schraube 32 verbindet eine äußere Gipsplatte 33 mit einer inneren Gipsplatte 34 der Tür 6. Der Kopf dieser Schraube 32 ist mit einer Faserschicht 35 abgedeckt, so dass keine Wärme über die als Wärmebrücke wirkende Schraube 32 in das Innere des Gehäuses 1 gelangt. Die Bodenwand 5 weist hinter der Gipsplatte 25 eine weitere Faserschicht 36 und dahinter eine innere Gipsplatte 37 auf. Die aus Platten bestehende innere Faserschicht 36 weist eine höhere Dichte als die äußere Faserschicht 14 auf. In der Tür 6 weist eine hintere Faserschicht 38 dieselbe Dichte wie eine äußere Faserschicht 39 auf. Die beiden Faserschichten 38 und 39 sind als Platten ausgebildet und mittels einer Gipsplatte 40 voneinander getrennt.

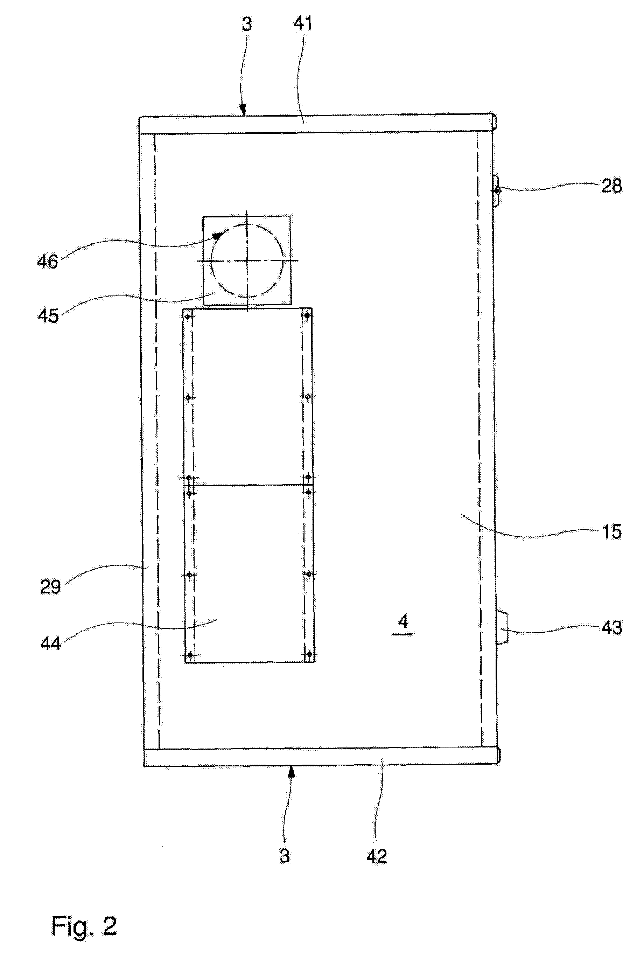

Figur 2 zeigt das Verteilergehäuse 1 mit den Gipsplatten 41, 42 der Seitenwände 3 und 4, der äußeren Gipsplatte 15 der Decke 4, den Scharnieren 28 der Tür 6, einen Türgriff 43 und die hintere äußere Gipsplatte 29 der Rückwand 2. Auf der Deckenwand 4 ist eine Abdeckung 44 angeordnet, unter der die Kabeleinführung 21 liegt. Neben der Abdeckung 44 ist ein Filter 45 angeordnet, unter dem ein Belüftungsschacht 46 liegt.

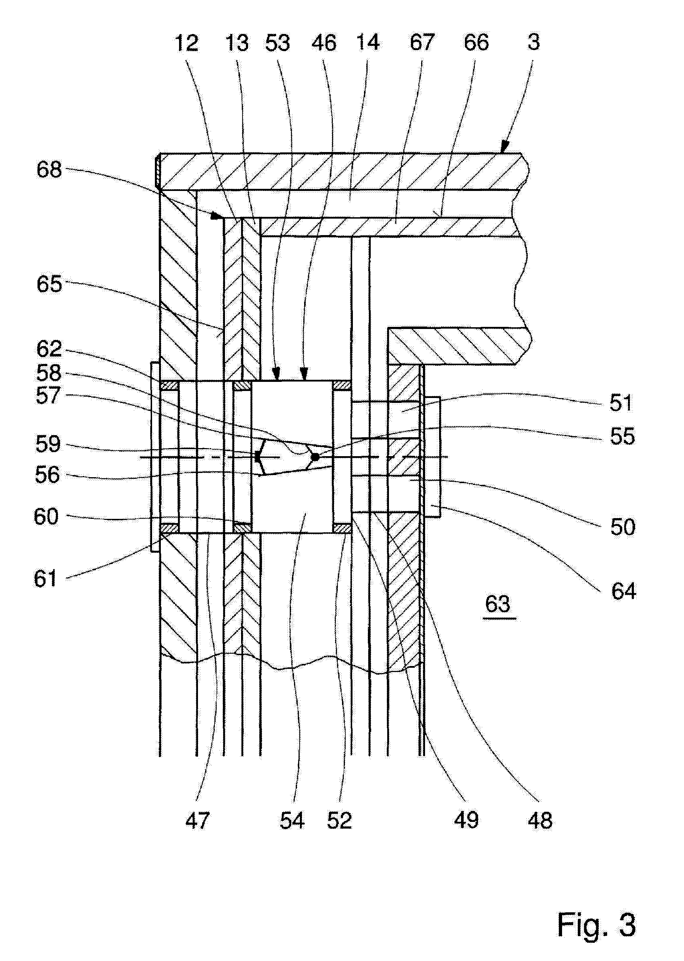

Figur 3 zeigt den Belüftungsschacht 46 innerhalb des Gehäuses 1. Der Belüftungsschacht 46 ist zweiteilig mit einem oberen Bereich 47 und einem unteren Bereich 48 aufgebaut. Die beiden Bereiche 47 und 48 sind durch eine Stufe 49 getrennt und der untere Bereich 48 weist Kanäle 50 und 51 auf. Auf der Stufe 49 sitzt ein Aufschäumring 52 auf. Über dem Aufschäumring 52 ist eine Absperrvorrichtung 53 mit einem Metallrohr 54, einem Mittenstab 55, zwei halbkreisförmigen Klappenflügeln 56 und 57, einer Feder 58 und einem Schmelzlot 59 angeordnet. Bei Überschreitung einer definierten Umgebungstemperatur von 72°C gibt das integrierte Schmelzlot 59 die Flügel 56 und 57 frei, die durch die Kraft der Feder 58 um den Mittenstab 55 eine viertel Umdrehung ausführen und das Metallrohr 54 schlagartig schließen. Auf dem Metallrohr 54 ist ein weiterer Aufschäumring 60 und an einem oberen Ende 61 des Belüftungsschachtes 46 ein dritter Aufschäumring 62 angeordnet. Die Aufschäummittel 52, 60 und 62 schäumen bei Hitzeeinwirkung im Brandfall auf, verschließen den Belüftungsschacht 46 und verhindern eine durch das Metallrohr 54 hergestellte Wärmebrücke in den Innenraum 63 des Verteilergehäuses 1. Im Innenraum 63 unterhalb der Kanäle 50, 51 ist ein Ventilator 64, im folgenden auch Lüfter genannt, angeordnet. Die Fasermatte 14 erstreckt sich über Oberflächen 65 und 66 der Platte 12 und einer weiteren Gipsplatte 67 der Wand 3 und über eine Ecke 68, die von der Platte 12 innerhalb der Wand 3 gebildet wird.

## Patentansprüche

1. Gehäuse (1) aus feuerhemmendem Material (7-15, 18, 23, 25, 26, 29, 30, 33-40) mit einer Rückwand (2), zwei Seitenwänden (3), einer oberen Deckenwand (4) und einer unteren Bodenwand (5) sowie einer herausnehmbaren oder drehbar gelagerten Tür (6), **dadurch gekennzeichnet, dass** in einer Wand (4) ein Schacht angeordnet ist.

2. Gehäuse nach Anspruch 1, **dadurch gekennzeichnet, dass** der Schacht (46) eine Absperrvorrichtung (53) aufweist.

3. Gehäuse nach Anspruch 2, **dadurch gekennzeichnet, dass** die Absperrvorrichtung (53) innerhalb der Wand (4) endet.

4. Gehäuse nach Anspruch 1 und/oder 2, **dadurch gekennzeichnet, dass** der Schacht (46) Aufschäummittel (52, 60, 62) aufweist.

5. Gehäuse nach Anspruch 1, 2 und/oder 4, **dadurch gekennzeichnet, dass** der Schacht (46) einen Filter (45) aufweist.

6. Gehäuse nach einem oder mehreren der vorhergehenden Ansprüche 1-5, **dadurch gekennzeichnet, dass** der Schacht (46) einen Lüfter (64) aufweist.

7. Gehäuse nach Anspruch 6, **dadurch gekennzeichnet, dass** der Lüfter (64) Luft durch den Schacht (46) ansaugt.

8. Gehäuse nach einem oder mehreren der vorhergehenden Ansprüche 1-7, **dadurch gekennzeichnet, dass** ein zweiter Schacht in der Tür (6) angeordnet ist.

9. Gehäuse nach einem oder mehreren der vorhergehenden Ansprüche 1-8, **dadurch gekennzeichnet, dass** der Schacht (46) einen oberen und einen unteren Bereich (47, 48) aufweist.

10. Gehäuse nach einem oder mehreren der vorhergehenden Ansprüche 1-9 zur Aufnahme elektronischer Schaltgeräte.

11. Gehäuse nach einem oder mehreren der vorhergehenden Ansprüche 1-10 zur Aufnahme von Datenmaterial.
